# EUROPEAN PATENT APPLICATION

(11) **EP 0 598 954 A1**
(43) Date of publication of application: **01.06.1994**
(21) Application number: 92310636.3
(22) Date of filing: 20.11.1992
(51) Int. Cl.: F16L 37/092

(54) **Pipe joint**

(71) Applicant: NITTA MOORE COMPANY, Osaka (JP)
(72) Inventor: Shimada, Haruki, c/o Nabari Factory of, Nabari-shi, Mie-ken (JP)
(74) Representative: Linn, Samuel Jonathan

(57) **Abstract**

A main body (1) of the pipe joint has a tapered inner surface (10) reducing in diameter toward a hose insertion port and a deformable collet (2), accommodated in the main body, is movable in its axial direction, and has an outward protrusion (22) engageable with the tapered surface (10). An engaging protrusion (23) is provided on the outer surface of the collet and an inward protrusion (11) is provided on the main body. When a hose (H) is inserted in the collet (2) and fluid pressure acts via the hose on the pipe joint, the collet (2) moves toward the hose insertion port and due to contraction of the collet the hose is securely grasped and reliably connected to the joint. If excessive fluid pressure acts thereon such that the outward protrusion (22) is moved into contact with the smallest diameter part of the tapered surface, the engaging protrusion (23) comes to abut the inward protrusion (11) and is arrested thereby so that the collet and the hose are prevented from slipping out of the pipe joint.

## Description

This invention relates to a pipe joint in which a collet is accommodated in a main body and is radially deformable, i.e. expansible and contractible so that a hose inserted into the collet may be securely grasped and released, respectively.

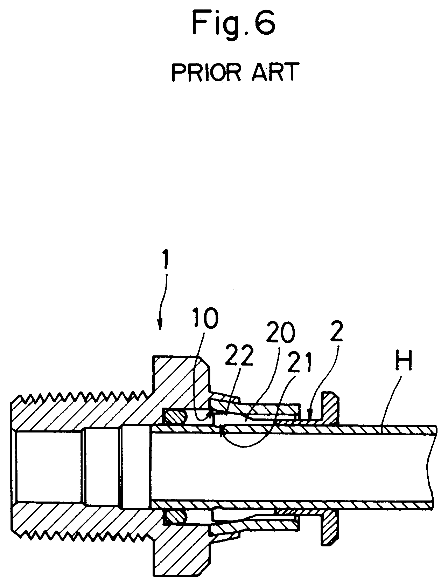

An example of this type of pipe joint is shown in Fig. 6, the pipe joint depicted having a tapered inner surface 10 on the main body 1 and a radially expansible and contractible collet 2. The collet is designed to come into contact with and to separate from the tapered surface 10 and to expand and contract accordingly, so that a hose H inserted in the collet 2 may be reliably connected to and disconnected from the joint.

The collet 2 is cylindrical and both ends thereof are open. The collet 2 comprises (a) a plurality of slits 20 open to a front end thereof in its direction of insertion into the main body, which slits make the collet 2 expansible and contractible; (b) a protrusion 22 positioned at or near the front end of the collet 2 and protruding radially outwardly for facilitating expansion and contraction of the front part of the collet 2, the protrusion 22 being designed to engage with the tapered surface 10; and (c) an engaging pawl 21 projecting radially inwardly to reliably grasp a hose H.

Here and below reference to the front end or the insertion end of the collet denotes the opposite end to the hose insertion port of the pipe joint (in other words, the left end of the collet as seen in the accompanying drawings).

When the hose H has been inserted into the collet 2 of the pipe joint and when fluid pressure acts on the joint by flowing through the hose (that is, when the pressure acts on the end of the hose H so as to tend to force it to pop out of the pipe joint), the collet 2 is forced to move along by the fluid, so that its outward protrusion 22 comes into contact with the tapered surface 10. The insertion end region of the collet 2 thereby contracts in diameter causing the engaging pawl 21 thereof to bite into the hose. The hose is thus reliably grasped and prevented from slipping out of the pipe joint.

However, in the pipe joint just described, if excessive fluid pressure acts on it, the hose H and the collet 2 engaged with it are liable to slip out of the pipe joint together.

As a means for solving this problem, Japanese Utility Model Publication No. 61-24787 discloses a pipe joint having a two-stage tapered inner surface. In other words the pipe joint has, adjacent a conventional tapered surface, another tapered surface, the inclination angle of the latter being larger than that of the former. In this pipe joint, the outward protrusion 22 engages with the tapered surface of larger inclination (the latter above) so that the possibility of the hose H and the collet 2, engaged together, slipping out from the pipe joint is lessened as compared with the above example.

However, even with this pipe joint, the above problem has not been eliminated in cases of excessive fluid pressure.

It is an object of the present invention to provide a pipe joint in which a collet and a hose inserted therein will not slip out together from the main body of the pipe joint even if excessive fluid pressure acts thereon.

The pipe joint of the present invention comprises a cylindrical main body having a tapered inner surface reducing in diameter toward a hose insertion port and a cylindrical radially deformable collet accommodated in the main body, movable in its axial direction, and having a radially outward protrusion which is engageable with the tapered surface upon movement of the collet, wherein when fluid pressure acts on the pipe joint in a state where a hose is inserted in the collet, the collet moves toward the hose insertion port, the outward protrusion of the collet comes into contact with the tapered surface of the main body and the collet then contracts in diameter such that the hose is grasped thereby and held in the pipe joint, reliably connected therewith, characterised in that the collet additionally has an engaging protrusion on its outer surface and the main body additionally has a radially inward protrusion on its inner surface, these protrusions being so arranged that when the outward protrusion of the collet is located near the smallest diameter part of the tapered surface, the engaging protrusion abuts the inward protrusion to prevent the collet and the hose from slipping out of the pipe joint.

The present invention has the following effects:
(1) When a hose has been inserted into the collet and ordinary fluid pressure acts on the pipe joint, the collet moves outwardly of the main body and its outward protrusion comes into contact with the tapered surface of the main body, just as in the conventional pipe joint described above, and this movement causes the insertion end region of the collet to radially contract, whereby the hose is securely grasped and held in the joint.
(2) When a hose has been inserted into the collet and excessive fluid pressure acts on the pipe joint, the outward protrusion of the collet is strongly urged into abutment against the smallest diameter part of the tapered surface of the main body. In this case, however, since the engaging protrusion on the outer surface of the collet and the inward protrusion on the inner surface of the main body are designed to engage with each other when the outward protrusion is located in the vicinity of the smallest diameter part of the tapered surface, the collet is prevented from moving further toward the pipe insertion port. Therefore the collet will not slip out of the main body of the joint.

A specific embodiment of a pipe joint in accordance with the invention will now be described, by way of example only, with reference to the accompanying drawings, in which:
Fig. 1 is a semi-sectional view of an embodiment of the pipe joint of the present invention and a hose to be connected thereto;
Fig. 2 is a semi-sectional perspective view of the pipe joint and the hose of Fig. 1;
Fig. 3 is a view similar to Fig. 1 showing the hose inserted into the pipe joint;
Fig. 4 is a similar view showing the relationship of the pipe joint, the hose, and the collet when the hose is inserted into the pipe joint and ordinary fluid pressure acts on the pipe joint;
Fig. 5 is a similar view showing the relationship of the pipe joint, the hose and the collet when the hose is inserted into the pipe joint and excessive fluid pressure acts on the pipe joint; and
Fig. 6 is a sectional view of a conventional pipe joint.

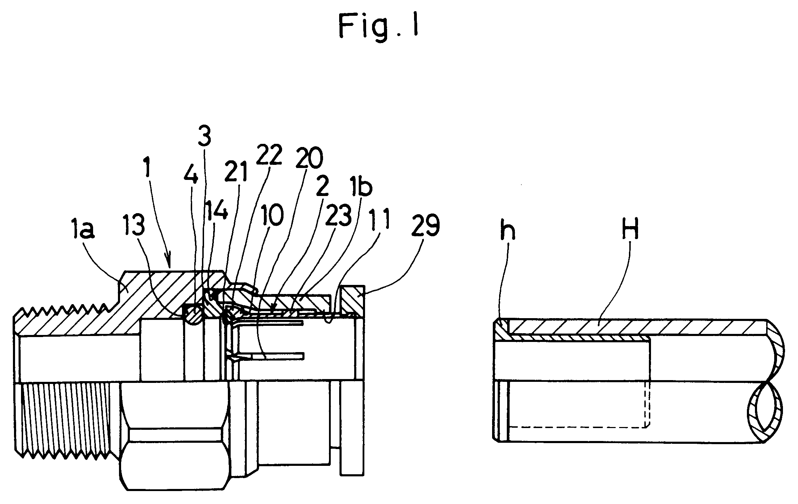

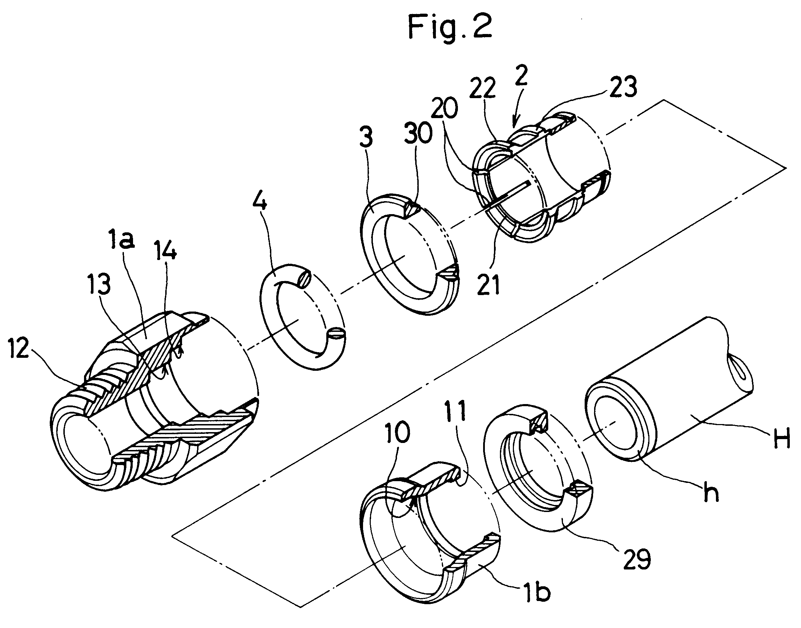

The pipe joint shown in Figs. 1 and 2 comprises a main body 1 formed by caulking a first tubular member 1a to a second tubular member 1b. The inner surface of the first tubular member 1a has a recess 13 for an O-ring 4 and a recess 14 for a ring 3, while the second tubular member 1b has a tapered inner surface 10 increasing in diameter at the end opposite to a pipe insertion port (i.e. adjacent the first tubular member 1a) and a radially inward protrusion 11, constituting means for preventing a collet 2 from slipping out of the main body, at the other end (i.e. at or near the pipe insertion port). The collet 2 is accommodated within the second tubular member 1b of the main body 1 and is movable in the axial direction.

A hose H to be fitted in the pipe joint may be made of elastic synthetic resin. When the hose H is inserted into and connected to the pipe joint, a tubular shape retaining piece h is inserted into the connecting end portion of the hose.

As shown in Figs. 1 and 2, the ring 3 is fitted into the recess 14, the ring 3 so that a tapered surface 30, reducing in diameter, which it possesses is diverted toward the hose insertion port, and is pressed by the end of the caulked second tubular member 1b so that the ring 3 is snugly located in the recess 14.

The collet 2 is cylindrical as shown in Fig. 2 and has a radially outward protrusion 22 on the exterior of its front or insertion end, an engaging pawl 21 on the inner surface thereof, an engaging protrusion 23 in the middle of the peripheral wall thereof for contact with the inward protrusion 11 of the main body and plural slits 20 open to the insertion end.

The radially outward protrusion 22 and the engaging pawl 21 are both provided only on the parts between the slits 20 so as to enhance expansion, contraction, and biting down of the collet onto the hose.

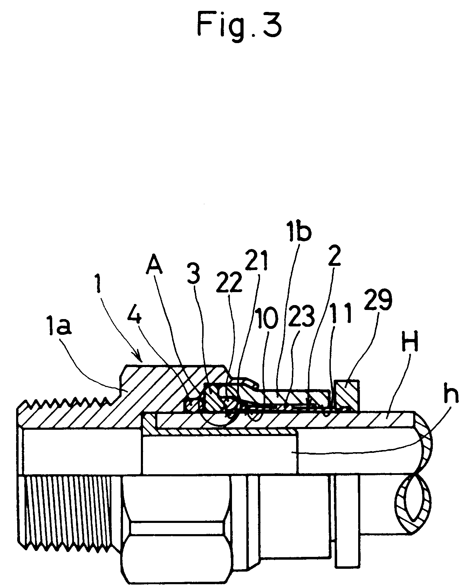

By movement of collet 2 along with the insertion of the hose H, or by forcing the collet 2 in deeper after the hose has been connected (by manipulation of a pushing member 29 provided at the hose insertion end of the collet 2), as shown in Fig. 3, the insertion end of the collet 2 is caused to abut against the tapered surface 30, and is then forced to expand (in this state, the engaging pawl 21 does not bite into the hose H). This is shown at part A of Fig. 3.

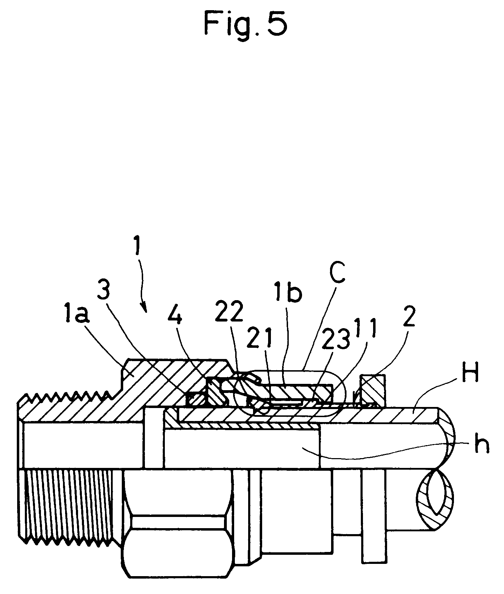

The engaging protrusion 23 of the collet 2 and the inward protrusion 11 of the main body 1 are designed to engage with and arrest each other when the collet moves so that its outward protrusion 22 is located near the smallest diameter end of the tapered surface 10 as shown at part C of Fig. 5.

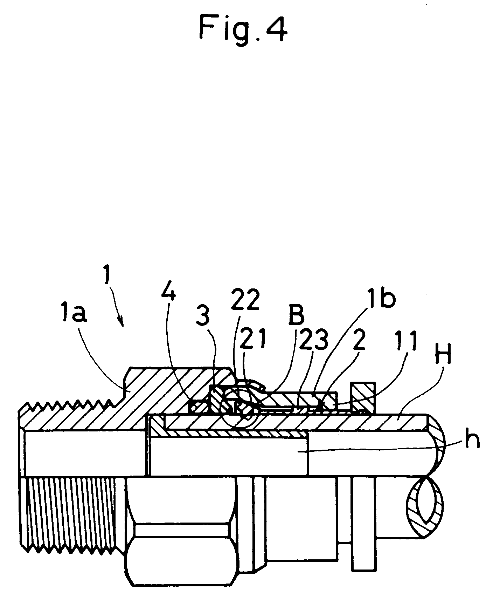

Being thus composed, the pipe joint of the present invention functions as follow:
(1) When a hose H has been inserted into the collet 2 and ordinary fluid pressure acts on the pipe joint, the collet 2 moves outwardly of the main body 1 so that its outward protrusion 22 abuts against the tapered surface 10. Along with this movement and the abutment of the protrusion 22 and the tapered surface 10, as shown in part B in Fig. 4, the insertion end region of the collet 2 is contracted in diameter and this causes the engaging pawl 21 to bit down into the hose H. The hose H is thus securely grasped by the pawl 21 and prevented from removal from the pipe joint.
(2) When a hose H has been inserted into the collet 2 and excessive fluid pressure acts on the pipe joint, the collet 2 moves outwardly of the main body 1 just the same as above, but the outward protrusion 22 of the collet 2 is more strongly urged into contact with the smallest diameter end of the tapered surface 10.

However, since the engaging protrusion 23 of the collet 2 and the inward protrusion 11 of the main body 1 are designed to engage with and arrest each other when the outward protrusion 22 comes into a position near the smallest diameter end of the tapered surface 10, as shown in part C in Fig. 5, the collet 2 is not allowed to move further toward the pipe insertion port. The movement of the collet 2 is limited and it is prevented from slipping out of the main body 1. At this point, just as before, the hose is, of course, securely grasped by the pawl 21.

Instead of the collet 2 formed with plural slits in the foregoing embodiment, a collet having a single slit extending from one end to the other end thereof, that is, a collet having a partly broken annular section, may be used.

With the pipe joint structure of the present invention the collet 2, and the hose inserted therein, are reliably prevented from slipping out of the main body 1. Even if excessive fluid pressure is applied to the pipe joint, the collet 2 and the hose H inserted therein, as one unit, will not slip out of the main body.

## Claims

1. A pipe joint comprising a cylindrical main body (1) having a tapered inner surface (10) reducing in diameter toward a hose insertion port and a cylindrical radially deformable collet (2) accommodated in the main body (1), movable in its axial direction, and having a radially outward protrusion (22) which is engageable with the tapered surface (10) upon movement of the collet (2) wherein when fluid pressure acts on the pipe joint in a state where a hose is inserted in the collet (2), the collet (2) moves toward the hose insertion port, the outward protrusion (22) of the collet (2) comes into contact with the tapered surface (10) of the main body (1) and the collet (2) then contracts in diameter such that the hose is grasped thereby and held in the pipe joint, reliably connected therewith, **characterised in that** the collet (2) additionally has an engaging protrusion (23) on its outer surface and the main body (1) additionally has a radially inward protrusion (11) on its inner surface, these protrusions (23, 11) being so arranged that when the outward protrusion (22) of the collet (2) is located near the smallest diameter part of the tapered surface (10), the engaging protrusion (23) abuts the inward protrusion (11) to prevent the collet (2) and the hose from slipping out of the pipe joint.

2. A pipe joint according to claim 1, wherein the collet (2) has a slit extending from one end to the other end thereof and thus is of broken circular section.

3. A pipe joint according to claim 1, wherein the collet (2) has plural slits open to the front end of the collet (2) in its direction of insertion into the main body (1).

4. A pipe joint according to claim 3, wherein the collet (2) additionally has a radially inwardly projecting pawl (21) provided on a portion between the slits (20).

5. A pipe joint according to claim 3 or 4, wherein the radially outward protrusion (22) of the collet (2) is provided on a portion between the slits (20).

6. A pipe joint according to any preceding claim further comprising a ring (3) located inside of the main body (1) and having a tapered outer surface (30) reducing in diameter toward the hose insertion port, the said tapered surface (30) being engageable with the inside of the outward protrusion (22) of the collet (2) so as to bring about expansion in the diameter of the collet (2).
